(19) Europäisches Patentamt
European Patent Office
Office européen des brevets

(11) Publication number: **0 656 363 A1**

(12) **EUROPEAN PATENT APPLICATION**

(21) Application number: **94119039.9**

(51) Int. Cl.[6]: **C07F 7/12**, C07F 7/08

(22) Date of filing: **02.12.94**

(30) Priority: **03.12.93 JP 303712/93**

(43) Date of publication of application: **07.06.95 Bulletin 95/23**

(84) Designated Contracting States: **DE FR GB**

(71) Applicant: **Shin-Etsu Chemical Co., Ltd.**
**6-1, Otemachi 2-chome**
**Chiyoda-ku**
**Tokyo 100 (JP)**

(72) Inventor: **Shinohara, Toshio**
**777-14, Yawata-machi**
**Takasaki-shi,**
**Gunma-ken (JP)**
Inventor: **Kudo, Muneo**
**791-4, Yanase**
**Annaka-shi,**
**Gunma-ken (JP)**
Inventor: **Iwabuchi, Motoaki**
**3-12-37, Isobe**
**Annaka-shi,**
**Gunma-ken (JP)**

(74) Representative: **Casalonga, Axel et al**
**BUREAU D.A. CASALONGA - JOSSE**
**Morassistrasse 8**
**D-80469 München (DE)**

(54) **Process for preparing a silane having a tertiary hydrocarbon group at the alpha position thereof.**

(57) The invention relates to a process for preparing a silane having a tertiary hydrocarbon group at the $\alpha$ position. The process comprises subjecting a Grignard reagent having a tertiary hydrocarbon group at the $\alpha$ position, e.g. a t-butylmagnesium halide or thexylmagnesium halide to reaction with chlorosilanes in the presence of a copper halide such as CuI, CuBr, CuCl or $Li_2CuCl_3$. By the process, the silanes having a tertiary hydrocarbon group at the $\alpha$ position can be obtained simply without use of any toxic substances as a catalyst.

EP 0 656 363 A1

## BACKGROUND OF THE INVENTION

### Field of The Invention

This invention relates to the preparation of a specific type of silane and more particularly, to a process for preparing a silane having a tertiary hydrocarbon group at the α position, such a silane being useful as a starting material for preparing silicone resins having a controlled refractive index and also as a surface water repellent for buildings, a silylating agent used to prepare medicines and an additive of a complex catalyst for polymerization of olefins.

### Description of the Prior Art

Known silanes having a tertiary hydrocarbon group at the α position include t-butylsilanes and thexylsilanes. It is known that t-butylsilanes are prepared according to a process using the reaction between chlorosilane and t-butyl lithium. It is also known that chlorosilane and a t-butylmagnesium halide as a Grignard reagent are reacted in the presence of a catalyst such as, for example, a CN or SCN group-containing compound (Patrick, J.L, David, P.M, and Quentin, E. T. , Organometallics. 1989, 8, 1121 and A Shirahata, IXth International Symposium of Organosilicone Chemistry, U. K., 1990, Abstract 2, 14).

For the preparation of the thexylsilanes, there is known a process wherein hydrosilanes and 2,3-dimethyl-2-butene are subjected to hydrosilation.

With the t-butylsilanes, intended silanes corresponding to starting chlorosilanes can be obtained using t-butyl lithium. However, since t-butyl lithium is expensive, the production costs undesirably become high. Accordingly, t-butylsilanes are now in use on an industrial scale only as a silylating agent for the preparation of medicines having a high value.

Where inexpensive Grignard reagents are used, the reaction does not proceed at all only by use of the Grignard reagent, for which it is necessary to use, for example, a catalyst of a very toxic CN group-containing compound such as CuCN, AgCN, $(C_4H_9)_3SnCN$, BrCN, $(CH_3)_3SiCN$, $Hg(CN)_2$ or the like. Thus, the resultant silane products have the problem on safety. In addition, a further serious problem is involved from the standpoint of environment and health in view of the fact that cyan-containing waste products are secondarily produced in large amounts during the course of the preparation. Moreover, it is also known that a thiocyanate compound such as $Ca(SCN)_2$, AgSCN or $(C_4H_9)NSCN$, or an isothiocyanate compound such as $(CH_3)_3SiNCS$ is used as the catalyst. However, these compounds are all toxic, coupled with another problem that the silanes obtained using these compounds are liable to assume an offensive odor inherent to the sulfur derived therefrom, thus being unfavorable in view of the commercial values of the final product.

The thexylsilanes known in the art include only thexyltrichlorosilane (J. Am. Chem. Soc. 70 484 (1948)) and thexyldimethylchlorosilane. The effective preparation of thexylsilanes which have such a structure as to be useful as a starting material for silicone materials, a surface water repellent or additive of a catalyst for polymerization olefins has never been known in the art.

## SUMMARY OF THE INVENTION

It is accordingly an object of the invention to provide a process for preparing silanes having a tertiary hydrocarbon group at the α position which overcomes the problems involved in the prior art processes.

It is another object of the invention to provide a process for preparing silanes having a tertiary hydrocarbon group at the α position by a simple procedure using a copper halide as a catalyst.

We have made extensive studies on the preparation of silanes having a tertiary hydrocarbon group at the α position through the Grignard reaction capable of forming carbon-silicon bonds. As a result, it has been found that Grignard reagents having a tertiary hydrocarbon group at the α position, e.g. t-butylmagnesium halides or thexylmagnesium halides, are reacted with chlorosilanes in the presence of a copper halide. The reaction is caused to proceed, as would not take place in the prior art processes, owing to the presence of the copper halide. Eventually, t-butylsilanes or thexylsilanes are obtained. It has been confirmed that according to the above reaction, the product obtained comprises a major proportion of an intended silane having a tertiary hydrocarbon group at the α position. The invention has been accomplished based on the above finding and also on further studies on the types and amount of catalysts.

Therefore, according to the invention, there is provided a process for preparing a silane having a tertiary hydrocarbon group at the α position, the process comprising subjecting a Grignard reagent having a tertiary hydrocarbon group at the α position to reaction with a chlorosilane in the presence of a copper halide. The reaction efficiently proceeds by the catalytic action of the copper halide to readily obtain an intended silane

having a tertiary hydrocarbon group at the α position.

## DETAILED DESCRIPTION OF THE INVENTION

According to the process of the invention, a Grignard reagent having a tertiary hydrocarbon group at the α position and a chlorosilane are reacted in the presence of a copper halide, thereby obtaining a silane having a tertiary hydrocarbon group at the α position.

The Grignard reagent useful in the present invention should have a tertiary hydrocarbon group at the α position. Such reagents include, for example, t-butylmagnesium chloride and thexylmagnesium chloride which are obtained by reaction between magnesium and compounds having a tertiary hydrocarbon group at the α position such as t-butyl chloride and thexyl chloride, respectively. Of course, other halides may be used as the Grignard reagent as will be set out hereinafter.

The thus obtained Grignard reagents having a tertiary hydrocarbon group at the α position may be used, for subsequent reaction with chlorosilanes, in the form of their solution in diethyl ether, dibutyl ether, tetrahydrofuran or the like solvent taken singly or in combination. The concentration of the reagent in the solvent is from 0.01 moles/liter to 10 moles/liter, preferably approximately 1 mole per liter.

The chlorosilane used for reaction with the Grignard reagent should have at least one chlorine atom and represented by the following general formula (1)

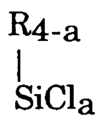

(1)

wherein R's independently represent a hydrogen atom, an unsubstituted or substituted alkyl group having from 1 to 8 carbon atoms such as methyl, ethyl, propyl, butyl, trifluoropropyl and the like, a cycloalkyl group having from 5 to 8 carbon atoms such as cyclopentyl, cyclohexyl or the like, or a phenyl group, and a is an integer of 1 to 4. Of course, R's may be the same or different.

Specific and preferred examples of the chlorosilane include methyltrichlorosilane, methyldichlorosilane, diphenyldichlorosilane, tetrachlorosilane, ethylphenyldichlorosilane, phenyltrichlorosilane and the like.

In the process of the invention, a copper halide is used as a catalyst. Examples of the copper halide include cuprous halides such as CuI, CuBr, CuCl and the like. $Li_2CuCl_3$ may also be used in the practice of the invention and is within the scope of the term "copper halide" used herein.

The reaction between the Grignard reagent and the chlorosilane according to the invention can be expressed by the following reaction formula

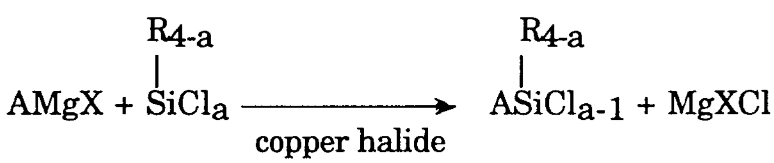


wherein A represents a tertiary hydrocarbon group and preferably

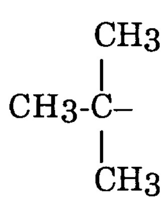
or
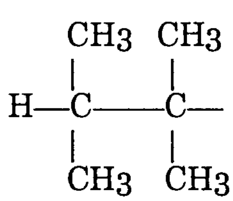
,

X represents a halogen such as chlorine, bromine or the like, and a is an integer of from 1 to 4 as defined hereinbefore.

One of preferable silanes having a tertiary hydrocarbon group at the α position and obtained by reaction between the chlorosilane of the formula (1) and the Grignard reagent according to the process of the

invention includes a t-butylsilane of the following general formula (2) using a t-butylmagnesium halide as the Grignard reagent

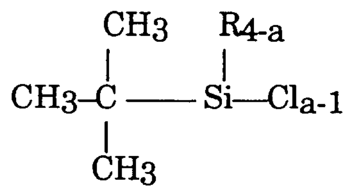

(2)

wherein R's independently have the same meaning as defined with respect to the general formula (1) and a has the same meaning as defined in the formula (1).

Another preferable silane includes a thexylsilane of the following general formula (3) using a thexylmagnesium halide as the Grignard reagent

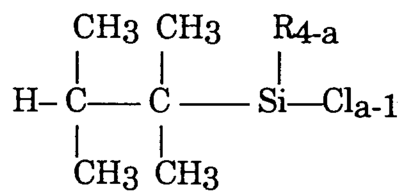

(3)

wherein R's and a have, respectively, the same meanings as defined above.

It should be noted that preferable halides used as the Grignard reagent include chlorides and bromides.

Once again, in the above formulas (2) and (3), R's each represents a hydrogen atom, an unsubstituted or substituted alkyl group having from 1 to 8 carbon atoms such as methyl, ethyl, propyl, butyl, trifluoropropyl and the like, a cycloalkyl group having from 5 to 8 carbon atoms such as cyclopentyl, cyclohexyl or the like, or a phenyl group. R's may be the same or different.

The reaction conditions for preparing a silane having a tertiary hydrocarbon group at the α position are described.

First, a copper halide catalyst is preferably added to a starting chlorosilane in an amount of from 0.1 to 10% by mole, more preferably from 0.5 to 3% by mole and most preferably 1% by mole, based on the Grignard reagent. Subsequently, a Grignard reagent is dropped in the mixture under agitation in an amount which preferably ranges from 50 mole% to 150 mole%, more preferably about 100 mole%, based on the chlorosilane at a reaction temperature of preferably from -20 °C to 60 °C, more preferably from 10 to 30 °C. In this connection, when the chlorosilane or a solvent used has a boiling point of not higher than 60 °C, the boiling point lower than 60 °C of either the chlorosilane or the solvent is used as an upper limit of the reaction temperature. After completion of the dropping, the reaction solution is refluxed, under which it is aged. The solvent is, for example, diethyl ether, dibutyl ether, tetrahydrofuran or the like solvent as set out with respect to the preparation of Grignard reagent.

At the time when it has been confirmed through gas chromatography that the reaction is completed, a hydrocarbon solvent which has a boiling point higher than the solvent used for the reaction is added to the reaction solution, followed by heating to distilling off the ether solvent. The resultant solution is subjected to filtration to remove secondarily produced salt therefrom and further to distillation to readily obtain an intended silane having a tertiary hydrocarbon group at the α position.

The invention is more particularly described by way of preparative examples of Grignard reagents, $Li_2CuCl_3$, and t-butylchlorosilanes used as reference substances and also by way of examples.

Preparation of Grignard Reagents:

A solution of 46.3 g (0.5 mols) of t-butyl chloride dissolved in 500 ml of dry tetrahydrofuran was dropped in 12.2 g (0.5 gram atoms) of magnesium to cause magnesium and t-butyl chloride to react with each other. After completion of the reaction, the resultant solution was filtered through a glass filter to remove unreacted magnesium therefrom to obtain a tetrahydrofuran solution of t-butylmagnesium chloride at a concentration of 0.95 mols/liter.

The general procedure set out above was repeated except that thexyl chloride was used instead of t-butyl chloride, thereby obtaining a tetrahydrofuran solution of thexylmagnesium chloride at a concentration of 1.01 mols/liter.

Preparation of $Li_2CuCl_3$:

0.333 g of LiCl was heated in vacuum and dried, followed by suspension in 4.653 g of tetrahydrofuran dried with metallic sodium in an atmosphere of argon. Separately, 0.408 g of CuCl was dried in vacuum, followed by suspension in 2.326 g of tetrahydrofuran dried with metallic sodium in an atmosphere of argon.

The CuCl suspension was dropped in the LiCl suspension under agitation in an atmosphere of argon to obtain a tetrahydrofuran solution containing 9.56 wt% of $Li_2CuCl_3$.

Reference Substances:

t-Butyl-dimethyl-chlorosilane, t-butyl-trichlorosilane and t-butyl-diphenylchlorosilane used were those commercially available from Shin-Etsu Chemical Co., Ltd. under the designations of silicon compound reagents. Besides, t-butyl-methyl-dichlorosilane was prepared from methyltrichlorosilane and t-butyl lithium.

Examples 1 to 4

0.04 g of CuI, 0.03 g of CuBr, 0.03 g of CuCl or 0.43 g of $Li_2CuCl_3$ was each added to 1.65 g (11.1 mmols) of methyltrichlorosilane along with 0.077 g of dodecane serving as an internal standard substance for gas chromatography, followed by dropping 11.7 ml of the tetrahydrofuran solution of 0.95 mols/liter of t-butylmagnesium chloride obtained above at 20°C for 24 hours. After completion of the dropping, the mixture was refluxed and aged for 3 hours. Thereafter, 12 ml of toluene was added to the mixture, followed by heating to distilling off the tetrahydrofuran.

Subsequently, the reaction mixture was filtered under suction to remove the resultant secondarily produced salt therefrom. The filtrate was subjected to distillation under reduced pressure to obtain a colorless transparent liquid. The thus obtained liquid was subjected to gas chromatography, revealing that the liquid consisted of a single component. This liquid was analyzed through gas chromatography and NMR, revealing that the substance was coincident with reference t-butyl-methyl-dichlorosilane. The yields are, respectively, shown in Table 1 below. It will be noted that the yields in this and other examples are determined based on the results of the gas chromatography.

Table 1

| Example | Chlorosilane | Grignard Reagent | Catalyst | Product | Yield (G.C.%) |
|---|---|---|---|---|---|
| 1 | $CH_3SiCl_3$ | 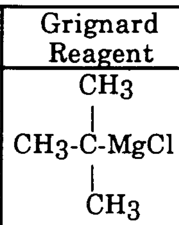 | CuI | 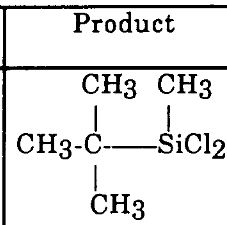 | 88 |
| 2 | do. | do. | CuBr | do. | 99 |
| 3 | do. | do. | CuCl | do. | 74 |
| 4 | do. | do. | $Li_2CuCl_3$ | do. | 55 |

Examples 5 to 8

The general procedures of Examples 1 to 4 were, respectively, repeated except that dimethyldichlorosilane was used instead of methyltrichlorosilane in each example, thereby obtaining t-butyl-dimethylchlorosilane. This product was coincident with the reference substance with the yields shown in Table 2.

Table 2

| Example | Chlorosilane | Grignard Reagent | Catalyst | Product | Yield (G.C.%) |
|---|---|---|---|---|---|
| 5 | $(CH_3)_2SiCl_2$ | $CH_3$<br>\|<br>$CH_3$-C-MgCl<br>\|<br>$CH_3$ | CuI | $CH_3$ $CH_3$<br>\| \|<br>$CH_3$-C——SiCl<br>\| \|<br>$CH_3$ $CH_3$ | 9 |
| 6 | do. | do. | CuBr | do. | 11 |
| 7 | do. | do. | CuCl | do. | 11 |
| 8 | do. | do. | $Li_2CuCl_3$ | do. | 11 |

Examples 9 to 12

The general procedures of Examples 1 to 4 were, respectively, repeated except that diphenyldichlorosilane was used instead of methytrichlorosilane in each example, thereby obtaining t-butyl-diphenylchlorosilane. This product was coincident with the reference substance with the yields shown in Table 3.

Table 3

| Example | Chlorosilane | Grignard Reagent | Catalyst | Product | Yield (G.C.%) |
|---|---|---|---|---|---|
| 9 | $(C_6H_5)_2SiCl_2$ | $CH_3$<br>\|<br>$CH_3$-C-MgCl<br>\|<br>$CH_3$ | CuI | $CH_3$ $C_6H_5$<br>\| \|<br>$CH_3$-C——SiCl<br>\| \|<br>$CH_3$ $C_6H_5$ | 8 |
| 10 | do. | do. | CuBr | do. | 20 |
| 11 | do. | do. | CuCl | do. | 24 |
| 12 | do. | do. | $Li_2CuCl_3$ | do. | 24 |

Examples 13 to 16

The general procedures of Examples 1 to 4 were, respectively, repeated except that tetrachlorosilane was used instead of methytrichlorosilane in each example, thereby obtaining t-butyl-trichlorosilane. This product was coincident with the reference substance with the yields shown in Table 4.

Table 4

| Example | Chlorosilane | Grignard Reagent | Catalyst | Product | Yield (G.C.%) |
|---|---|---|---|---|---|
| 13 | $SiCl_4$ | 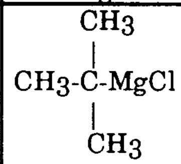 | CuI | 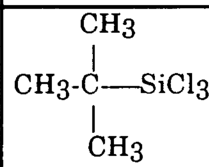 | 29 |
| 14 | do. | do. | CuBr | do. | 23 |
| 15 | do. | do. | CuCl | do. | 64 |
| 16 | do. | do. | $Li_2CuCl_3$ | do. | 48 |

Example 17

3.58 g of CuI was added to 139 g (0.94 mols) of methyltrichlorosilane, in which 1,100 ml of a tetrahydrofuran solution of 0.85 mols/liter of thexylmagnesium chloride was dropped at 40 °C in 1 hour. After completion of the dropping, the reaction solution was refluxed and aged for 3 hours, followed by addition of 1,000 ml of toluene and heating to distill off the tetrahydrofuran.

The secondarily produced salt was removed by filtration under suction and the resultant filtrate was subjected to distillation under reduced pressure under conditions of 75 °C/30 mmHg, thereby obtaining 20 g of a colorless transparent liquid. The gas chromatographic analysis revealed that the liquid consisted of a single component.

Then, the liquid was subjected to NMR analysis with the following results.

Analytical Values of $^1$H-NMR (ppm: $CDCl_3$)

1.9 to 1.1 (m, 1H, -CH)
1.1 to 0.8 (m, 12H, $-CH_3$)
0.13 (s, 3H, $-SiCH_3$)

From the above results, the component was identified as thexyl-methyldichlorosilane having the following formula

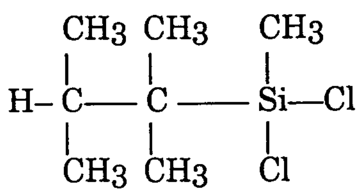

The isolated yield of this compound was 11%. For comparison, when CuI was not used at all, the yield of the thexylmethyldichlorosilane was 0%.

Example 18

0.382 g of CuI was added to 58.6 g (0.51 mols) of methyldichlorosilane, followed by dropping 500 ml of a tetrahydrofuran solution of 1.04 mols/liter of thexylmagnesium chloride at 40 °C in 1 hour. After completion of the dropping, the reaction solution was refluxed and aged for 2 hours. Thereafter, 500 ml of toluene was added to the solution and heated to distill off the tetrahydrofuran.

The secondarily produced salt was removed by filtration under suction and the resultant filtrate was distilled under a reduced pressure at 82 °C/30 mmHg to obtain 28 g of a colorless transparent liquid. The gas chromatographic analysis revealed that the liquid consisted of a single component.

The liquid was subjected to NMR analysis with the following results.

Analytical values of $^1H$-NMR (ppm: $CDCl_3$)

4.1 to 4.0 (m, 1H, -SiH)
1.9 to 1.1 (m, 1H, -CH)
1.1 to 0.8 (m, 12H, $-CH_3$)
0.13 (s, 3H, $-SiCH_3$)

From the above results, the component was identified as thexyl-methylchlorosilane having the following formula

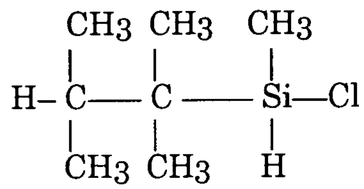

The isolation yield of this compound was 33%. For comparison, when CuI was not used at all, the yield of the thexylmethyldichlorosilane was 0%.

Examples 19 to 22

0.04 g of CuI, 0.03 g of CuBr, 0.03 g of CuCl or 0.43 g of $Li_2CuCl_3$ was added to 1.65 g (11.1 mmols) of methyltrichlorosilane along with 0.077 g of dodecane, to which 10.6 ml of a tetrahydrofuran solution of 1.05 mols/liter of thexylmagnesium chloride, followed by allowing to stand at 20 °C for 24 hours. The resultant liquid was analyzed through gas chromatography and was also subjected to NMR analysis, revealing the formation of methylthexyldichlorosilane. The yields are as shown in Table 5 below.

Table 5

| Example | Chloro-silane | Grignard Reagent | Catalyst | Product | Yield (G.C.%) |
|---|---|---|---|---|---|
| 19 | $CH_3SiCl_3$ | 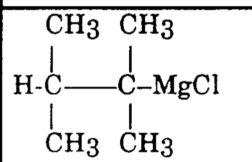 | CuI | 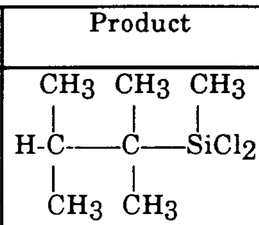 | 29 |
| 20 | do. | do. | CuBr | do. | 38 |
| 21 | do. | do. | CuCl | do. | 44 |
| 22 | do. | do. | $Li_2CuCl_3$ | do. | 25 |

Examples 23 to 26

The general procedure of Examples 19 to 22 were repeated except that methyldichlorosilane was used instead of methyltrichlorosilane, thereby obtaining methyl-thexyl-chlorosilane. The yields are shown in Table 6 below.

Table 6

| Example | Chloro-silane | Grignard Reagent | Catalyst | Product | Yield (G.C.%) |
|---|---|---|---|---|---|
| 23 | $CH_3HSiCl_2$ | 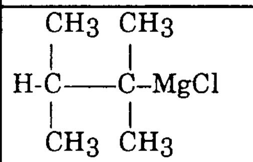 | CuI | 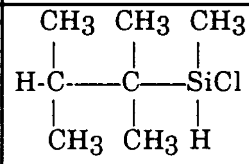 | 20 |
| 24 | do. | do. | CuBr | do. | 14 |
| 25 | do. | do. | CuCl | do. | 16 |
| 26 | do. | do. | $Li_2CuCl_3$ | do. | 21 |

As will be apparent from the foregoing examples, the Grignard reagent having a tertiary hydrocarbon group at the α position and chlorosilanes which do not react at all in the absence of a copper halide are reacted with each other in the presence of a copper halide to provide silanes, such as t-butylsilanes and thexylsilanes, having a tertiary hydrocarbon group at the α position.

## Claims

1. A process for preparing a silane having a tertiary hydrocarbon group at the α position, the process comprising subjecting a Grignard reagent having a tertiary hydrocarbon group at the α position to reaction with a chlorosilane in the presence of a copper halide.

2. The process according to Claim 1, wherein said chlorosilane is a compound of the following general formula

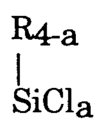

wherein each R independently represents a hydrogen atom, an unsubstituted or substituted alkyl group having from 1 to 8 carbon atoms, a cycloalkyl group having from 5 to 8 carbon atoms or a phenyl group, and a is an integer of 1 to 4, and said Grignard reagent is a t-butylmagnesium halide or thexylmagnesium halide, so that said silane consists of a t-butylsilane of the following general formula

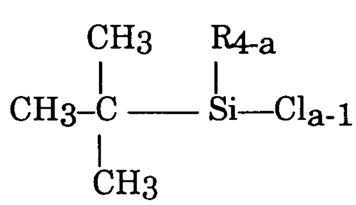

or a thexylsilane of the following general formula

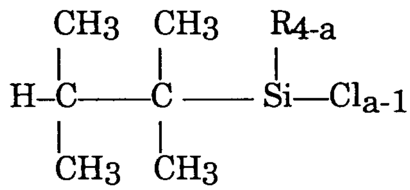

wherein R's and a have, respectively, the same meanings as defined above.

**3.** The process according to Claim 1 or 2, wherein said copper halide is CuI, CuCl, CuBr or $Li_2CuCl_3$.

**4.** The process according to any of the preceding claims, wherein said Grignard reagent is present in a reaction system in an amount from 50 to 150 mole% based on said chlorosilane and said copper halide is present in an amount of from 0.1 to 10 mole% based on said Grignard reagent wherein the reaction is effected at a temperature of from -20 to 60 ° C.

**5.** The process according to any of the preceding claims, wherein the reaction is effected in an ether solvent.

European Patent Office

# EUROPEAN SEARCH REPORT

Application Number
EP 94 11 9039

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 542 250 (SHIN-ETSU CO)<br>* claims 1,2 * | 1 | C07F7/12<br>C07F7/08 |
| A | EP-A-0 405 560 (DOW CORNING TORAY SILICONE COMPANY)<br>* claim 1 * | 1 | |
| A | TETRAHEDRON LETTERS,<br>vol.30, no.46, 1989<br>pages 6393 - 6394<br>AKIHIKO SHIRAHATA<br>*the whole document* | 1 | |
| P,A | DATABASE WPI<br>Week 9415,<br>Derwent Publications Ltd., London, GB;<br>AN 94-124130<br>& JP-A-6 073 070 (DENKI KAGAKU KOGYO) 15 March 1994<br>* abstract * | 1 | |
| A | EP-A-0 298 487 (TORAY SILICONE COMPANY)<br>* claim 1 * | 1 | TECHNICAL FIELDS SEARCHED (Int.Cl.6)<br>C07F |

The present search report has been drawn up for all claims

| Place of search | Date of completion of the search | Examiner |
|---|---|---|
| BERLIN | 20 March 1995 | Clement, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)